# EUROPEAN PATENT APPLICATION

(11) **EP 2 182 570 A1**
(43) Date of publication of application: **05.05.2010**
(21) Application number: 08018801.4
(22) Date of filing: 28.10.2008
(51) Int. Cl.: H01M 8/02, H02K 3/24

(54) **Arrangement for cooling of an electrical machine**

(71) Applicant: Siemens Aktiengesellschaft, 80333 München (DE)
(72) Inventor: Möhle, Axel, Dr., 12163 Berlin (DE); Stiesdal, Henrik, 5000 Odense C (DK)

(57) **Abstract**

The invention relates to an arrangement for cooling of an electrical machine. A stator of the machine contains a number of stacked laminate plates (LP), while a laminate plate (LP) has a number of slots (SL) on one side. The slots (SL) of the stacked laminate plates (LP) are forming channels (CH), to carry metal-winding (MW) of electrical coils of the stator. There is a metal cooling-pipe (CP) within at least one channel (CH) for cooling-purposes of the laminate plates (LP) only.

## Description

The invention relates to an arrangement for cooling of an electrical machine.

In a preferred embodiment the invention relates to an arrangement for cooling of an electrical machine, which is totally enclosed by a shell or housing.
Such kind of electrical machine could be for example a generator, which is located within a nacelle of a wind-turbine.

The electrical machine shows a stator with stacked laminate plates made of metal. The laminate plates are manufactured from a sheet of iron, for example they are punched out from the sheet of iron.

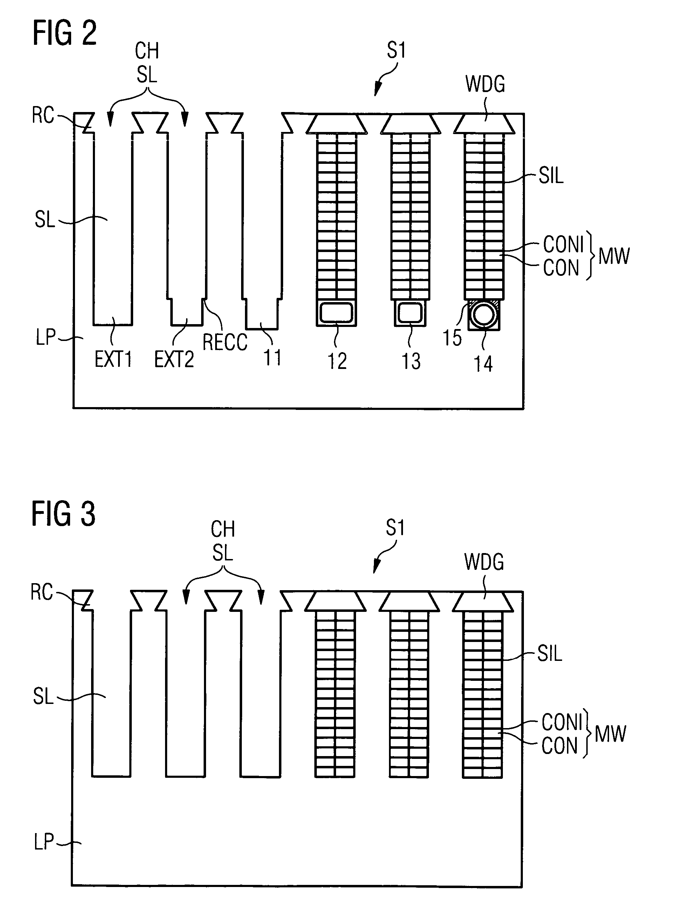

FIG 3 shows the shape of a typical laminate plate LP, to be part of a stator of a generator.

A first side S1 of the laminate plate LP is aimed to an air gap, which is between the stator and a rotor of the generator. At this first side S1 there are a number of slots SL. For example the slots SL are punched out from the laminate plate LP.

A number of laminate plates LP will be stacked, so the slots SL will form channels CH accordingly. The channels CH are used to carry metal windings MW of an electrical coil of the stator.

Each metal winding MW is formed by a conductor CON, which is surrounded by a conductor-isolation CONI. Each slot SL shows a slot isolation lining SIL to insulate the bundle of metal windings MW.

Each slot SL shows on its top a recess RC, which is built to carry a wedge WDG. When the metal windings MW of the electrical coils are inserted they are kept in place by help of the wedge WDG.

When the electrical machine is at work, a certain proportion of input-power is lost as heat, so the electrical machine needs to be cooled.

Most of this heat is generated at the metallic winding MW of the stator. In order to ensure sufficient lifetime of an insulation system of the metallic winding, the winding temperature leads to a specification of a stator cooling system.

It is known to cool large electrical machines by various means.

One very common cooling method is the circulation of a gaseous medium like air inside the electrical machine. This gaseous medium is kept cool for example with a heat exchanger.

This cooling method has the disadvantage, that it requires large gas-to-air or gas-to-water heat exchangers. Furthermore, considerable power is required to circulate the cooling medium.

Another very common cooling method is the circulation of a liquid coolant on the side of the stator, which is not facing to the air gap. So heat is transferred by conduction through the laminate plates from the metallic winding on the one hand to the cooling medium on the other hand.

This cooling method leads to the disadvantage that due to moderate heat conductivity of the laminate iron a considerable temperature gradient will exist between the stator winding and the cooling medium. As a result it may be difficult to maintain the winding temperature below the required maximum value.

It is known to avoid the disadvantages of the above common cooling systems by introducing a liquid or gaseous cooling as described now in the subsequent.

One method used is to install hollow copper bars as conductors in the coil winding, which exceeds the channels of the laminate plates. This provides a cooling right where the heat is generated.

The drawback is that this cooling arrangement requires numerous joints in the coils - both for electrical connection and for cooling medium inlet and outlet. Therefore, it is normally only used in very large turbo-generators.

Another method is, to install cooling pipes within the slots, inserted under the coil winding or in between parts of the winding. As the cooling pipes are exposed to the same electromagnetic fields as the winding of the coil, voltages will be induced in the cooling-pipes too, if they would be made of metal or other conductive material. So non-conductive pipes are used for slot-cooling, especially pipes made of ceramic are used.

This provides cooling right next to the place where the heat is generated, but non-conductive or ceramic pipes are very expensive and, as they cannot be bent, numerous joints will be required, leading to a high risk of leakage.

It is aim of the present invention, to provide an improved cooling arrangement for an electrical machine, where the cooling arrangement is cheap and reliable.

This aim is solved by the features of claim 1.
Advantageous embodiments of the invention are subject of the dependent claims.

According to the invention, there is an arrangement for cooling of an electrical machine. The elctrical machine is in a preferred embodiment a generator of a wind turbine.

The electrical machine contains a rotor and a stator, where the stator contains a number of stacked laminate plates.

Each laminate plate shows a number of slots on a first side, so because of the stacked laminate plates the slots are forming channels, which are used to carry metal windings of a electrical coil of the stator.

A metallic pipe for cooling purposes is inserted within the channel, to cool down the temperature of the winding.

In a preferred embodiment the metal-pipe for cooling is mounted in a so called "zigzag"-manner within the channels being made by the slots. This kind of "zig-zag" is described within the figures in more detail.

As a consequence of this cooling-pipe-forming, an induced voltage within the cooling-pipe of one slot or channel is neutralised by the voltage(s) induced in the cooling-pipe of one or more adjacent other slots or channels. As a consequence, the total voltage induced in the cooling pipe will be reduced or will be completely eliminated.

Because of this, the resulting cooling system is cheap, reliable, non-sensitive to high temperatures and easy to implement within the slots.

Furthermore since a metallic pipe can typically be bent, a single piece of pipe can be bent to pass through a large number of slots or channels, so a number of joints can be kept to a minimum.

Additionally the cooling metal pipe is non-sensitive to long-term material-effects, so the cooling pipe keeps its material variables, its heat conduction and its stability for a long time without changes.

In the preceding the invention will be described in more detail by the help of some figures, where
- FIG 1: shows the inventive cooling-arrangement in a three-dimensional manner,
- FIG 2: shows the inventive cooling-arrangement in a two-dimensional manner together with a laminate plate, and
- FIG 3: shows the typical laminate plate as described above.

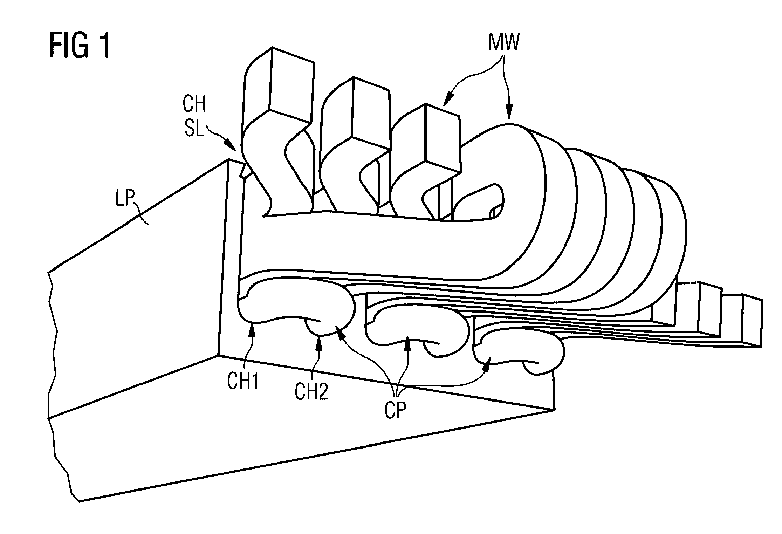

FIG 1 shows the inventive arrangement for cooling of an electrical machine.

A number of laminate plates LP are stacked as described, while each laminate plate LP shows a number of slots SL. Because of the stacking the slots SL are forming a number of channels CH, which are used to carry metal-windings MW of a stator-coil.

The stacked laminate plates LP are part of an inner stator of a generator, for example, to be located within a nacelle of a wind-turbine. So the generator shows an outer-rotor (which is not shown here), too.

Within the channel CH there is an additional cooling-pipe CP, which is hollow and which is made of metal.

Within this cooling-pipe CP there is a cooling fluid, to transport heat away from the metal-windings MW and to transport heat away from the laminate plates LP.

In a preferred embodiment water is used as cooling fluid.

In a preferred embodiment the cooling-pipe CP is mounted in a so called "zigzag"-manner. So "zigzag" means that the cooling-pipe CP is guided through a first channel CH1 in one direction and is guided back in an opposite direction through a second channel CH2.

In a preferred embodiment the first channel CH1 is adjacent to the second channel CH2.

If a multiple of the cooling-pipes of three channels is connected in series, a resulting induced voltage in these cooling-pipes becomes zero.

This arrangement suits best if there is no "third harmonic" in the air-gap field. A third harmonic normally occurs in the air gap in case of an electrically or permanentmagnet excited synchronous machine.

This preferred embodiment therfore suits best for normal 3-phase stator and rotor windings.

If there is a third harmonic in the air-gap field then it is a preferred embodiment that the cooling-pipe runs through every second slot, leaving one slot between them without a cooling-pipe. In this case the third harmonic does not induce voltage if a multiple of cooling-pipes of at least 6 slots is connected in series.

It should be noted that the description of these figure is only exemplary. So it is possible to adjust the location of the cooling-pipes within the dedicated slots or channels and their orientation, too, in dependency of the induced voltage and in dependency of the characteristics of the machine or generator. In particular, the above description is valid for a machine with one slot per pole per phase. For machines with different rations of slots per poles per phase the arrangement of the cooling pipes will need to be adjusted to achieve optimum cancellation of the induced voltages.

Accordingly within the first channel CH1 the cooling-pipe CP directs a cooling fluid from an upside to a downside direction, while within the second channel CH2 the cooling-pipe CP directs the cooling fluid back from downside to upside direction.

So in a preferred embodiment the cooling-pipe CP is shaped as hairpin bends. The cooling pipe CP is a continuous metalic pipe and shows of a number of hairpin bends.

The magnetic field from rotor-magnets will induce a voltage in pieces of the cooling-pipe CP. Because of the "zig-zag"-manner the induced voltages in these pieces will counteract each other, leading to a minimum voltage difference, which is between endings of the cooling pipe CP. So a high voltage-value between the endings will be avoided.

In a preferred ambodiment the stator shows several cooling pipes CP connected in parallel.

It has to be noted, that the cooling-pipe made of metal does not form part of the generator winding and so does not provide a power output for active use.

FIG 2 shows the inventive cooling-arrangement together with a laminate plate LP.

A first side S1 of the laminate plate LP is aimed to an air gap, which is between the stator and a rotor of the generator. At this first side S1 there are a number of slots SL. For example the slots SL are punched out from the laminate plate LP.

A number of laminate plates LP will be stacked, so the slots SL will form channels CH accordingly. The channels CH are used to carry metal windings MW of an electrical coil of the stator.

Each metal winding MW is formed by a conductor CON, which is surrounded by a conductor-isolation CONI. Each slot SL shows a slot isolation lining SIL to insulate the bundle of metal windings MW.

Each slot SL shows on its top a recess RC, which is built to carry a wedge WDG. When the metal windings MW of the electrical coils are inserted they are kept in place by help of the wedge WDG.

According to the invention the slot SL is extended simply with an first extension EXT1, that has the same width than the slot SL itself.

Or the slot SL is extended with a second extension EXT2, that has a smaller width 11 than the slot SL itself. This creates a recess corner RECC which can be used as carrier for the metal windings MW of the coils. The second extension EXT2 may be deeper than its width 11 in a preferred embodiment.

The extensions EXT1, EXT2 may be fitted with a rectangular metallic pipe 12 or with a square metallic pipe 13 or with a circular metallic pipe 14.

If the metallic pipe is circular it might be advantageous to insert a heat transfer element 15 to allow a better heat-transportation. In that case the heat transfer element 15 is made preferably of extruded aluminium, for example.

## Claims

1. Arrangement for cooling of an electrical machine,
- where a stator of the machine contains a number of stacked laminate plates (LP), while a laminate plate (LP) has a number of slots (SL) on one side,
- where slots (SL) of the stacked laminate plates (LP) are forming channels to carry a metal-winding (MW) of electrical coils of the stator,
**characterized in,**
- **that** there is a metal cooling-pipe (CP) within at least one channel (CH) for cooling-purposes of the laminate plates (LP).

2. Arrangement according to claim 1, **characterized in that** the cooling-pipe (CP) is filled with a cooling medium to be part of a cooling system.

3. Arrangement according to claim 2, **characterized in that** the cooling-pipe (CP) is filled with a liquid cooling medium.

4. Arrangement according to claim 3, **characterized in that**
- the liquid cooling-medium is water, or
- the liquid cooling-medium is water with added antifreeze agents or oil.

5. Arrangement according to one of the preceding claims, **characterized in that** the cooling-pipe (CP) is a continous metalic pipe showing a number of hairpin bends, which are placed in slots (SL) or channels (CH), to reduce or minimize voltages which will be induced at the metal cooling-pipe (CP) while the electrical machine is at work.

6. Arrangement according to claim 5, **characterized in**
- **that** the cooling-pipe (CP) is located within a first and a second channel (CH1, CH2),
- **that** the first and the second channel (CH1, CH2) are directly adjacent,
- so the cooling medium is guided through the first channel (CH1) in a first direction and is guided back through the second channel (CH2) in a second direction, while the first direction is contrary to the second direction.

7. Arrangement according to claim 5**, characterized in**
- **that** the cooling-pipe (CP) is located within a first and a second channel (CH1, CH2) while there is a third channel without cooling pipe located between them,
- so the cooling medium is guided through the first channel (CH1) in a first direction and is guided back through the second channel (CH2) in a second direction, while the first direction is contrary to the second direction.

8. Arrangement according to one of the preceding claims, **characterized in that** the channels are used to carry two metal windings (MW1, MW2) of a double-layer winding, while the cooling-pipe (CP) is located between the metal-windings.

9. Arrangement according to one of the preceding claims, **characterized in that** the electrical machine is a generator.

10. Arrangement according to claim 9, **characterized in that** the generator is located within a nacelle of a wind-turbine.

11. Arrangement according to claim 9, **characterized in that** the generator is an outer-rotor and inner-stator generator.

12. Arrangement according to claim 9**, characterized in**
- **that** the slots (SL) of the laminate plate (LP) are located on one side (S1) of the laminate-plate (LP), and
- **that** the side (S1) is aimed to an air gap, which is between the stator and the rotor of the generator.

13. Arrangement according to one of the preceding claims, **characterized in that** the slots (SL) show an extension (EXT1, EXT2) to carry the cooling-pipe (CP).

14. Arrangement according to claim 13**, characterized in that** the extension (EXT2) has a smaller width (11) than the slot (SL) itself to create a recess corner (RECC) to be used as carrier.

15. Arrangement according to one of the preceding claims, **characterized in that** the diameter of the cooling pipe is rectangular or square or circular.

16. Arrangement according to one of the preceding claims, **characterized in that** the cooling pipe (CP), which is located within the slot (SL) or channel (CH), is surrounded by an additional heat transfer element (15).
